# EUROPÄISCHE PATENTSCHRIFT

(11) **EP 3 129 276 B1**
(45) Veröffentlichungstag und Bekanntmachung des Hinweises auf die Patenterteilung: **07.08.2019**
(21) Anmeldenummer: 15716500.2
(22) Anmeldetag: 10.04.2015
(51) Int. Cl.: B62K 3/06, B62K 19/30, B62K 19/48, B62M 6/40, B62M 6/80, B62K 25/02, B62K 19/08

(54) **FAHRRAD**
BICYCLE
BICYCLETTE

(30) Priorität: 11.04.2014 CH 563142014
(43) Veröffentlichungstag der Anmeldung: 15.02.2017
(73) Patentinhaber: Swissfleet Services GmbH, 8050 Zürich (CH)
(72) Erfinder: DOUGLAS, Philip, 8933 Maschwanden (CH); WÜLSER, Tobias, 8307 Effretikon (CH); STIEGER, Patrik, 8002 Zürich (CH); LOACKER, Frank, 8422 Pfungen (CH)
(74) Vertreter: Rentsch Partner AG
(86) Internationale Anmeldenummer: PCT/EP2015/057885
(87) Internationale Veröffentlichungsnummer: WO 2015/155352

(56) Entgegenhaltungen:
- EP-A1- 0 890 504
- WO-A1-2013/117643
- DE-A1-102011 052 270
- DE-A1-102011 053 733
- DE-U1- 29 618 907

## Beschreibung

Die Erfindung betrifft ein Fahrrad mit einem elektrischen Antrieb, sowie eine Rahmenstruktur für ein solches.

Die WO 2013/ 117643 derselben Anmelderin wurde erstmals 2013 publiziert und zeigt eine Antriebsvorrichtung für Fahrräder. Diese umfasst ein zentrales Gehäuse, an welchem seitliche Schwingen zur Halterung eines Rades angebracht werden können. Im zentralen Gehäuse können ein Motor, ein Getriebe und/oder weitere Komponenten angeordnet werden.

Die EP 2 230 164 der Firma Thömus Veloshop wurde 2010 erstmals publiziert und beschreibt einen Fahrradrahmen, in welchem eine für einen Hilfsantrieb geeignete Batterieeinheit im Unterrohr untergebracht werden kann. Das Unterrohr verfügt dazu über eine verschliessbare Öffnung, durch welche eine Batterieeinheit auf einfache Weise in den Rohrabschnitt eingebracht oder aus diesem entnommen werden kann. Ein Antriebsmotor ist bei dem in der Druckschrift gezeigten Fahrrad in das Hinterrad integriert.

EP 1 188 659 von der Fa. Honda Motor Co. Ltd. wurde 2002 erstmals publiziert und zeigt ein zerlegbares Fahrrad mit Hilfsantrieb. Die Nabe des hinteren Laufrades wird beidseitig an einem zweigeteilten hinteren Teil der Rahmenstruktur befestigt. Diese sind durch Verschraubungen miteinander verbunden. Der hintere Teil der Rahmenstruktur wird durch eine Art von Scharnier mit der vorderen Rahmenstruktur auf einfache Art lösbar verbunden. Die Sattelstange wird direkt am hinteren Teil der Rahmenstruktur mittels Klemmung befestigt, wobei kein herkömmliches Sattelrohr vorhanden ist. Die Batterieeinheit wird zwischen den beiden Teilen der hinteren Rahmenstruktur befestigt, wogegen die restlichen Komponenten des Antriebs unterhalb dieser angeordnet sind.

Eine Aufgabe der Erfindung ist es, ein Fahrrad, welches sich für einen elektrischen Antrieb eignet, sowie eine Rahmenstruktur für ein solches zu zeigen.

Ein Aspekt der Erfindung basiert auf einer Rahmenstruktur (Rahmenbox), welche einen besonders robusten, verwindungssteifen und trotzdem leichten Aufbau aufweist. Weiterhin weist die Rahmenstruktur eine vergleichsweise einfache Konstruktion auf, welche kostengünstig hergestellt werden. Ein weiterer Vorteil besteht darin, dass sich die Rahmenstruktur für unterschiedliche Fahrzeuge eignet.

Ein Aspekt der Erfindung sieht vor, dass die Antriebskomponenten und die Energieversorgung im Inneren der Rahmenstruktur angeordnet sind und so eine kompakte Einheit mit einem tiefen Schwerpunkt bilden. Die Rahmenstruktur schützt die Komponenten vor äusseren Einflüssen. Indem die Rahmenstruktur zumindest bereichsweise aus einem gut wärmeleitenden Material besteht, kann sie gleichzeitig als Kühlkörper dienen.

Anwendungsgebiete sind z.B. robuste Mietvelos mit und ohne elektrischen Antrieb, Fahrräder für den Lastentransport, Fahrräder mit mehr als zwei Rädern (Dreiräder), usw. Die erfindungsgemässe Rahmenstruktur kann auch einfach an andere Anwendungsgebiete angepasst werden. Z.B. besteht die Möglichkeit die Rahmenstruktur in Leichtbaufahrzeugen zu verwenden, welche sich besonders für den Nahverkehr eignen. Es besteht die Möglichkeit auch Fahrzeuge mit vier oder mehr Rädern aufzubauen.

In einer Ausführungsform weist die Rahmenstruktur zwei jeweils im Wesentlichen U-förmige Blechteile auf. Ein erster Bereich umfasst eine Schwingenstruktur mit zwei Schwingen, welche frontal durch einen Steg (Schulter) verbunden sind. Z.B. können die Schwingen aus in eine U-Form gebogenem Blech bestehen, das einen Radkasten zur teilweisen Aufnahme und Lagerung eines Rades bildet. Ein zweiter Bereich umfasst eine Rahmenbrücke aus einem im Wesentlichen U-förmigen Blechteil, welches einen relativ grossen Volumenbereich einschliesst und so ein Gehäuse für einen Antrieb (Antriebsbox) bildet, in welchem bei Bedarf die Komponenten zum Aufbringen eines Antriebsmoments und auch andere Komponenten, wie z.B. eine Steuerung angeordnet sein können. Zur Erhöhung der Stabilität können die Blechränder der Schwingenstruktur und der Rahmenbrücke zumindest bereichsweise abgekantet sein.

Alternativ oder in Ergänzung kann die Antriebsbox zur Aufnahme eines Innenlagers (Tretlagers) für eine Tretlagerwelle und eines Kettenblatts oder einer Riemenscheibe dienen. Ebenso ist es möglich in einer solchen Antriebsbox einen Elektromotor oder eine andere Art von Motor unter zu bringen.

Bei einer Variante der Rahmenstruktur werden die Schenkelenden der U-Form der Rahmenbrücke mit der Schulter der U-Form der Schwingenstruktur mechanisch fest verbunden, so dass die Biegeachsen der Schwingenstruktur und der Rahmenbrücke im Wesentlichen senkrecht zueinander stehen. Bei Bedarf können an den Schenkelenden der Schwingenstruktur speziell ausgestaltete Bügel zur Halterung eines Rades bzw. einer Radnabe angeordnet sein. Diese Bügel ermöglichen eine gekapselte Anordnung des Antriebes ohne, dass eine allenfalls vorhandene Antriebskette bei der Montage geteilt werden muss. Weiterhin kann so auch ein Antriebsriemen eingesetzt werden.

Ein weiterer Vorteil der Rahmenstruktur gegenüber aus dem Stand der Technik bekannter Rahmenstrukturen ist, dass die Geometrie der Schwingenstruktur nicht direkt von jener der Antriebsbox abhängt. Auf diese Weise ist es unter Verwendung von nur einem Typ von Schwingenstruktur möglich, mittels unterschiedlich geformter Rahmenbrücken verschiedene Arten von Rahmenstrukturen für unterschiedliche Fahrzeuge zu bauen.

Gemäss der Erfindung kann ein Fahrrad mit einer Rahmenstruktur eine Schwingenstruktur aus einem ersten im Wesentlichen U-förmigen Blechteil zur Aufnahme eines Rades, sowie eine Rahmenbrücke aus einem zweiten im Wesentlichen U-förmigen Blechteil aufweisen. Dabei ist vorgesehen, dass das erste U-förmige Blechteil im Wesentlichen in einer ersten Biegeebene in eine erste U-Form gebogen ist und das zweite U-förmige Blechteil in einer zweiten Biegeebene in eine im Wesentlichen zweite U-Form gebogenen ist. Die erste Biegeebene ist dabei erfindungsgemäss im Wesentlichen senkrecht zur zweiten Biegeebene angeordnet, wie nachfolgend noch genauer erläutert ist. Die erste Biegeebene kann als eine Ebene verstanden werden, die im Wesentlichen senkrecht auf die Biegeachse oder Biegeachsen des ersten im Wesentlichen U-förmigen Blechteils steht. Die zweite Biegeebene kann als eine Ebene verstanden werden, die im Wesentlichen senkrecht auf die Biegeachse oder Biegeachsen des zweiten im Wesentlichen U-förmigen Blechteils steht. Bevorzugt weisen das erste U-förmige Blechteil und das zweite U-förmige Blechteil jeweils einen ersten Schenkel mit einem ersten Schenkelende und einen zweiten Schenkel mit einem zweiten Schenkelende sowie einen Schulterbereich auf. Erfindungsgemäss können das erste und das zweite Schenkelende des zweiten U-förmigen Blechteils mechanisch mit dem Schulterbereich des ersten U-förmigen Blechteils verbunden sein.

Die Rahmenbrücke kann eine Stützstruktur umfassen, die sich zwischen den beiden Schenkeln der Rahmenbrücke erstreckt und diese miteinander wirkverbindet und auch zur Halterung einer Antriebskomponente dienen kann. Die Stützstruktur kann wenigstens eine Ausnehmung zur Aufnahme einer Antriebskomponente aufweisen. Die Stützstruktur kann z.B. eine Plattenstruktur sein. Eine solche Plattenstruktur kann eine oder mehrere Platten umfassen. Auf diese Weise kann die Stützstruktur bei Bedarf auf einfache Weise wenigstens bereichsweise mechanisch verstärkt werden, wie nachfolgend noch genauer erläutert ist. Eine Verbesserung der strukturmechanischen Eigenschaften kann erreicht werden, wenn zumindest ein Rand der Schwingenstruktur und/ oder zumindest ein der Rahmenbrücke wenigstens bereichsweise nach innen und/ oder nach aussen abgekantet sind. Die Rahmenbrücke kann Öffnungen zum Befestigen weiterer Rahmenteile und/ oder eines Ständers und/ oder zur Verwendung als Kühllufteintritt aufweisen.

Das erste und das zweite Schenkelende der Schwingenstruktur können jeweils ein Aufnahmemittel zur Lagerung einer Radachse aufweisen. Bevorzugt stehen diese bügelförmig von den Schwingen ab, können also als Bügel betrachtet werden. Die Aufnahmemittel können auch Ausfallenden umfassen.

Eine besonders einfache Montage eines Hinterrads, bzw. ein schnelles Austauschen eines solchen, kann erzielt werden, wenn die Aufnahmemittel Halteelemente aufweisen, die relativ zu den Schwingen verstellbar sind. In einer Variante solcher Ausführungsformen können die Haltemittel verstellbar an fest mit den Schwingen verbundenen Bügeln angebracht sein, wie nachfolgend noch genauer erläutert ist. In einer Variante davon, kann mittels Stellschrauben die Ausrichtung (z.B. der Abstand) der Haltemittel relativ zur Tretlagerwelle verändert werden. Die Stellschrauben können dazu in Längsöffnungen verschiebbar angeordnet sein. Dadurch kann die Distanz einer von den Aufnahmemitteln gehaltenen Radachse zur Tretlagerwelle vergrössert oder verkleinert werden, und dadurch z.B. die Spannung einer Antriebskette oder eines Antriebsriemens eingestellt werden. Dadurch kann gegebenenfalls auf einen zusätzlichen Ketten- bzw. Riemenspanner verzichtet werden. Die Halteelemente können Ausfallenden aufweisen.

In einer Variante der Rahmenstruktur können die Halteelemente von den Schwingen trennbar sein, so dass beispielsweise unterschiedliche Halteelemente für unterschiedliche Arten von Hinterrädern verwendet werden können. In einer solchen Variante können also an den Bügeln Schnittstellen zur Aufnahme unterschiedlicher Halteelemente angeordnet sein.

Eine Rahmenstruktur gemäss der Erfindung kann grundsätzlich auch einteilig aus einem Stück Blech gefertigt werden. In den meisten Fällen ist es jedoch vorteilhaft, wenn die Rahmenstruktur aus mehreren Teilen zusammengesetzt wird. Vorzugsweise können die einzelnen Teile aus Aluminium bzw. Aluminiumlegierungen oder aus Stahl hergestellt werden. Auch sind Hybridbauweisen unter Verwendung von unterschiedlichen Materialen für verschiedene Teile einer erfindungsgemässen Rahmenstruktur möglich.

Bei einer erfindungsgemässen Rahmenstruktur ist es möglich, verschiedene austauschbare seitliche äussere Abdeckungen zu verwenden und damit die Antriebsbox gegen aussen abzuschliessen. Dadurch können beispielsweise die in der Antriebsbox angeordneten Antriebskomponenten vor Vandalismus, Feuchtigkeit und Staub geschützt werden. Werden die Blechränder der Schwingenstrukturen abgekantet, so können durch solche äussere Abdeckungen bei beiden Schwingen jeweils in die Antriebsbox übergehende Fächer definiert und gegen aussen abgekapselt werden. Diese eignen sich z.B. zur Aufnahme eines Akkus oder einer Antriebskette oder einem Antriebsriemen oder von weiteren Elementen. Die Abdeckungen können zur Kühlung der innen angeordneten Elemente dienen.

Die äusseren Abdeckungen können ein- oder mehrteilig ausgebildet sein und beispielsweise aus Metall, tiefgezogenem transparentem oder opaken Kunststoff oder aus faserverstärktem Kunststoff hergestellt sein. Die Abdeckungen können Teil der Tragstruktur sein. Am hinteren Ende der Schwingen können bei Bedarf zusätzliche Abdeckelemente (z.B. Schalenelemente, Abdeckbleche) angebracht sein, die bspw. zusätzlichen Vandalenschutz für die Bremsanlage (Bremsscheibe) bieten sollen. Diese Abdeckelemente können ebenfalls Elemente zur gezielten Umlenkung von der das Fahrrad umströmenden Luft, und damit etwa zur Kühlung der Bremsanlage während der Fahrt aufweisen.

Die Rahmenstruktur kann zusätzliche Befestigungspunkte zur Befestigung zusätzlicher Komponenten aufweisen. So können etwa im Bereich der Schenkelenden der Flügelstruktur Befestigungspunkte für einen Gepäckträger angeordnet sein.

Durch die Verwendung von gut Wärme leitenden Materialien (beispielsweise Aluminium) kann die Rahmenstruktur auch zur Ableitung von Wärme dienen, welche von im Innern der Rahmenstruktur angeordneten Komponenten, z.B. einem Antriebsmotor, einem Acku, von einer Komponente der Antriebssteuerung oder einer Bremse ausgeht. Dazu kann die Rahmenstruktur bei Bedarf zusätzliche Elemente zur Erhöhung der Konvektion, z.B. Kühlrippen oder Kühlkanäle aufweisen.

Je nach Ausführungsform und Anwendungsgebiet sind die einzelnen Teile der Rahmenstruktur zusammen geklebt, geschweisst, genietet und/ oder geschraubt.

Durch die Verwendung von Blechteilen - im Gegensatz zu den im Stand der Technik verwendeten Rahmenstrukturen aus Rohren - können die erfindungsgemässen Rahmenstrukturen auf einfache Art und Weise mittels Robotern geschweisst werden. Dadurch können Rahmenstrukturen mit hoher Genauigkeit und hoher Reproduzierbarkeit äusserst kostengünstig hergestellt werden.

Ein Vorteil der erfindungsgemässen Rahmenstruktur besteht darin, dass massenreiche Komponenten wie z.B. Akkus vergleichsweise nahe an der Fahrbahn angeordnet werden können. Dadurch liegt der Gesamtschwerpunkt eines auf einer erfindungsgemässen Rahmenstruktur aufgebauten Fahrrads relativ nahe an der Fahrbahn. Ein solches Fahrrad lässt sich gut rangieren und weist einen besonders stabilen Stand auf, kippt also nicht leicht um. Ebenso weisen entsprechende Fahrräder gute Fahreigenschaften auf.

Eine Variante der Erfindung sieht die Verwendung eines aktiven Kühlsystems für die Batterien und/ oder den Motor und/ oder die Bremsen vor. Dieses System kann beispielsweise einen Ventilator und/ oder ein Peltier-Element und/ oder ein Kühlmittelkreislauf umfassen. Ein solches aktives Kühlsystem kann während der Fahrt und/ oder während eines Ladezyklus für eine verbesserte Kühlung von Batterie, Elektronik und Motor sorgen. Ein solches System kann auch Kühlkanäle umfassen, die sich entlang der Rahmenstruktur in deren Innern erstrecken und eine Durchströmung der Rahmenstruktur zwischen einem oder mehreren Kühlluftein- und Austritten ermöglichen. Insbesondere können solche Systeme in heissen Klimazonen verwendet werden.

Zusätzlich oder alternativ sind erfindungsgemäss auch innerhalb einer Rahmenstruktur angeordnete Systeme zum aktiven Heizen der Akkus oder anderer Komponenten denkbar, um etwa optimale Ladezyklen der Akkus im Winter oder in kalten Klimazonen zu ermöglichen. Alternativ zu solchen aktiven Heizsystemen oder unterstützend für solche können Teile der Rahmenstruktur auch über eine Wärmeisolation verfügen.

Alternativ oder in Ergänzung weist wenigstens eine der beiden Schwingen der Rahmenstruktur ein Fach auf, welches z.B. durch Entfernen einer Abdeckung oder Öffnen einer Klappe geöffnet werden kann. Dies ermöglicht beispielsweise die Entnahme, bzw. den Austausch eines Akkus. Alternativ oder zusätzlich kann dadurch beispielsweise ein Zugang zu einer Energie- oder einer Datenschnittstelle freigegeben werden. Ein solcher Klappmechanismus kann auch zur besseren Kühlung der Akkus, beispielsweise im Stillstand eines Fahrrads, verwendet werden. Die Ver- bzw. Entriegelung und das Auf- bzw. Zuklappen kann dabei manuell oder automatisch erfolgen.

Ein weiterer Aspekt betrifft einen Lenker für ein Fahrrad, welcher sich ideal für die Kombination mit der Rahmenstruktur eignet.

Bei einem solchen Lenker gehen die Lenkerrohre (Gabelarme) und Lenkholme (Griffe) ineinander über und bilden so einen durchgängigen inneren Kanal. Dadurch können etwa elektrische Leiter der Steuerung und Lichtanlage und auch Bowdenzüge der vorderen und/ oder hinteren Bremsanlage grösstenteils im Innern des Lenkers angebracht und dadurch besser vor Vandalismus geschützt werden. In einer Ausführungsform eines erfindungsgemässen Lenkers besteht dieser im Wesentlichen aus zwei jeweils einteilig aus einem Rohr gefertigten Strukturen, die mittels Biegen und hydraulischem Rundpressen umgeformt werden.

Dieser Lenker kann ein erstes und ein zweites davon strukturell getrenntes Gabelrohr und einen ersten und einen zweiten Lenkholm umfassen, wobei das erste Gabelrohr strukturell in den ersten Lenkholm und das zweite Gabelrohr strukturell in den zweiten Lenkholm übergehen. Bevorzugt erstreckt sich in beiden Gabelrohren jeweils eine durchgehende Öffnung bis in die Lenkholme, worin elektrische Kabel oder Bremskabel (z.B. Bowdenzüge) angeordnet werden können. An den Gabelrohren können ebenfalls elektrische Kontaktpole angeordnet werden, die beispielsweise zum Laden von Ackus verwendet werden können. Bevorzugt umfasst ein Gabelrohr jeweils einen Kontaktpol. Ebenfalls können die Gabelrohre als mechanisches Andockmittel an eine Andockstelle dienen.

In einem weiteren Aspekt ist vorgesehen, am Lenker eine Verbindung mit einer Andockstation zu realisieren und dazu eine Verbindungsstelle in demselben zu integrieren. Dazu können beispielsweise zwei für die Aufladung der Akkus verwendete elektrische Kontakte (Kontaktpole) jeweils separat in einem der beiden Lenkerrohre untergebracht werden. Dadurch können zur Verbindung mit einer Andockstation etwa beispielsweise zwei an den Lenkrohren angebrachte Klemmen verwendet werden, die eine gesicherte mechanische Verbindung und gleichzeitig auch eine elektrische Verbindung zu den Kontaktpolen herstellen.

In einer Variante sind Mittel zur Verbindung mit einer Andockstation im Bereich der Aufhängung des Vorderrads angebracht. Dazu können auf einer Seite oder auf beiden Seiten der Radachse Kontaktelemente angeordnet sein, die in eine mechanische und/ oder elektrische/ elektronische Verbindung zwischen einem Fahrrad und einer Andockstation ermöglichen. Die Kontaktelemente können als im Wesentlichen zylindrische Bolzen ausgestaltet sein. Die Kontaktelemente können so ausgestaltet sein, dass sie eine mechanische und/ oder elektrische/ elektronische Verbindung zwischen einer Andockstation und dem Fahrrad ermöglichen. Die elektrische Verbindung kann mittels physischem Kontakt und/ oder mittels Induktion erfolgen. Ein besonders schnelles Wiederaufladen von in einem Fahrrad vorhandenen Energiespeichern (Akkus) sowie ein robuster Datenaustausch zwischen Andockstation und Fahrrad kann erreicht werden, wenn der Ladestrom über elektrische Kontakte (z.B. Schleifkontakte) erfolgt und die Datenübertragung im Wesentlichen kontaktlos mittels Induktion erfolgt. Ein Fahrrad mit dermassen angeordneten Kontaktelementen ermöglicht eine besonders vandalensichere Ankopplung des Fahrrads an eine Andockstation. Dies ist insbesondere dann der Fall, wenn sie in Verbindung mit einem Lenker in der obgenannten Art verwendet werden, da bei einem solchen die elektrischen Verbindungen von den Kontaktelementen durch die Gabelrohre geführt werden können, wodurch sie vor Vandalismus besser geschützt werden können. Alternativ oder zusätzlich können Verbindungsstellen zu einer Andockstation auch am Lenker oder der Rahmenstruktur angebracht sein.

Ein weiterer Aspekt betrifft einen Fahrradständer (Ständer).

Durch die Verwendung einer im Wesentlichen gegenüber aussen gekapselten Rahmenstruktur kann ein solcher Fahrradständer auf relativ einfache Weise auch die Funktion einer Diebstahlsicherung wahrnehmen. Dabei ist vorgesehen, dass ein solcher Fahrradständer eine oder vorzugsweise zwei Stützen umfasst, die in ausgeklapptem Zustand automatisch verriegelt werden. Ein auf dem Fahrradständer abgestelltes Fahrrad wird dadurch an einer Weiterfahrt gehindert. Erfindungsgemäss sind dabei die ein Einklappen des Ständers verhindernden (mechanischen) Komponenten im Wesentlichen im Innern der Rahmenstruktur des Fahrrads angeordnet und damit vor ungewünschtem Zugriff geschützt. Ein möglicher verwendeter Mechanismus kann einen Schliessriegel umfassen, der mittels Formschluss den Fahrradständer nach dem Aufklappen am Zuklappen hindert. Dazu sperrt der Schliessriegel im Wesentlichen Rotationen des Ständers um sein Drehlager, indem er von einem Halteelement blockiert wird. Ein solches Halteelement kann beispielsweise Teil eines elektrischen automatischen Türöffners sein. Solche sind etwa von Haustüren von Mehrparteiengebäuden bekannt. Die Entriegelung solcher Türöffner erfolgt meist durch Anlegen einer elektrischen Spannung. Eine solche kann beispielsweise von einer elektronischen Steuerungseinheit ausgelöst werden, nachdem etwa ein zur Benutzung des Fahrrads autorisierter Benutzer identifiziert wurde. Erfindungsgemäss ist es insbesondere möglich, dass eine solche Identifizierung/Autorisierung durch die Verwendung eines RFID-Systems erfolgt. Ebenso ist es möglich, für die Entriegelung rein mechanische Systeme zu verwenden, etwa ein herkömmliches Schlüssel-Schloss-System. Es ist dabei vorteilhaft, wenn die erfolgte Entriegelung einem Benutzer akustisch und/ oder optisch mitgeteilt wird. Das Auf- und/ oder Zuklappen eines Ständers kann erfindungsgemäss auch automatisch erfolgen, beispielsweise über einen elektrischen Servoantrieb.

Es ist auch vorgesehen, dass beim Ausklappen des Fahrradsständers die Elektronik des Fahrrads beispielsweise die Energieversorgung des Antriebsmotors unterbricht.

Ein solcher Ständer für ein Fahrrad weist beispielsweise eine eingeklappte Stellung und eine ausgeklappte Stellung auf. Zudem umfasst er einen Verriegelungsmechanismus, der den Ständer in wenigstens einer ausgeklappten Stellung gegen ein Einklappen sichert und eine Entriegelung ermöglicht. Um diesen Mechanismus vor unbefugtem Zugriff zu schützen ist er im Innern der Rahmenstruktur angeordnet. Bevorzugt verfügt der Verriegelungsmechanismus über Mittel zur elektromechanischen Entriegelung. Ebenso kann er funktionell an eine Antriebssteuerung des Fahrrads gekoppelt sein. Die Entriegelung des Ständers kann mittels RFID und/ oder einem mechanischen Schlüssel und/ oder der Eingabe eines Zahlencodes und/oder einer biometrischen Identifizierung eines Benutzers erfolgen.

Ein weiterer Aspekt betrifft eine Vorrichtung zur Befestigung eines Sattels an einem Fahrrad (Sattelbefestigung). Um eine einfache Verstellbarkeit der Sattelhöhe zu erhalten, ist dabei vorgesehen, eine wenigstens teilweise in der Sitzstrebe (Sitzrohr) angebrachte Gasdruckfeder zu verwenden. Entsprechende Gasdruckfedern sind beispielsweise für die Höhenverstellung von Bürostühlen bekannt. Es ist vorteilhaft, wenn die Sattelstütze über keinen kreisrunden Querschnitt verfügt. Insbesondere sind Sattelstützen mit elliptischem oder eckigem Querschnitt vorteilhaft. An der Sitzstrebe befindet sich eine mit dem Querschnitt der Sattelstütze korrespondierende Manschette. Dadurch werden unerwünschte relative Rotationen zwischen dem Sattel und dem restlichen Fahrrads verhindert.

Die Merkmale der verschiedenen beschriebenen Ausführungsformen bzw. Varianten können kombiniert werden, sofern sie sich nicht gegenseitig ausschliessen.

Die Erfindung soll nachfolgend anhand von Ausführungsbeispielen im Zusammenhang mit der Zeichnung näher erläutert werden. Es zeigen:
- Fig. 1: zeigt ein Fahrrad mit einer Antriebseinheit;
- Fig. 2: zeigt eine Antriebseinheit mit einer Rahmenstruktur von hinten-oben- rechts;
- Fig. 3: zeigt Detail A von Figur 2;
- Fig. 4: zeigt eine Antriebseinheit mit einer Rahmenstruktur von hinten-oben-links;
- Fig. 5: zeigt Detail B von Figur 4;
- Fig. 6: zeigt eine Rahmenstruktur und eine Radnabe in einer ersten Ansicht;
- Fig. 7: zeigt eine Explosionsdarstellung einer Rahmenstruktur;
- Fig. 8: zeigt einen Fahrradständer in einer ersten Ansicht;
- Fig. 9: zeigt einen Fahrradständer in einer weiteren Ansicht;
- Fig. 10: zeigt Schnitt C-C aus Figur 9;
- Fig. 11: zeigt einen Fahrradständer in einer weiteren Ansicht;
- Fig. 12: zeigt Detail D aus Figur 11 ;
- Fig. 13: zeigt einen Fahrradständer in einer weiteren Ansicht;
- Fig. 14: zeigt eine Explosionsdarstellung eines Fahrradständers;
- Fig. 15: zeigt einen Lenker eines Fahrrads in einer ersten Ansicht;
- Fig. 16: zeigt Detail Eaus Figur 15;
- Fig. 17: zeigt einen Lenker eines Fahrrads in einer weiteren Ansicht;
- Fig. 18: zeigt einen Sattel in einer ersten Ansicht;
- Fig. 19: zeigt einen Sattel in einer zweiten Ansicht;
- Fig. 20: zeigt Schnitt F-Faus Figur 19;
- Fig. 21: zeigt Detail G aus Figur 20;
- Fig. 22: zeigt eine Rahmenstruktur;
- Fig. 23a: zeigt Detail H aus Figur 22, wobei sich die Halteelemente in einer ersten Position befinden;
- Fig. 23b: zeigt Detail H aus Figur 22, wobei sich die Halteelemente in einer zweiten Position befinden;
- Fig. 24: zeigt Kontaktelemente im Bereich der Vorderachse eines Fahrrads;
- Fig. 25: zeigt Detail I aus Figur 25.

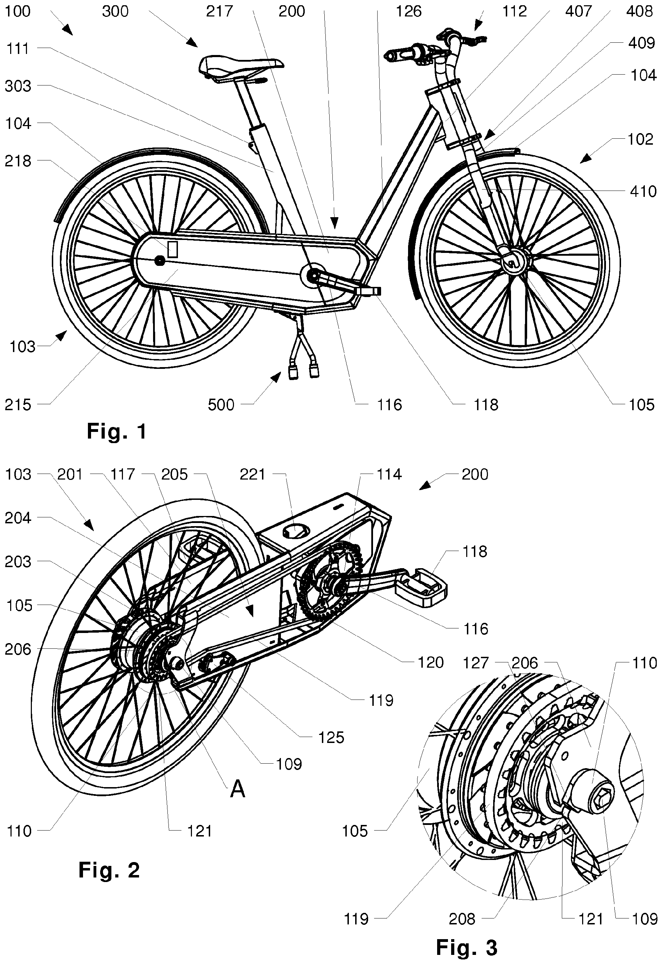

**Figur 1** zeigt ein Fahrrad 100 mit einer möglichen erfindungsgemässen Rahmenstruktur 200. Das gezeigte Fahrrad 100 verfügt über ein Vorderrad 102 und ein Hinterrad 103. Das Hinterrad 103 ist mit der Rahmenstruktur 200 verbunden, welche wiederum über einen als Unterrohr 126 gestalteten Verbindungsträger und ein Steuerrohr 407 mit einem Lenker 112 verbunden ist. Der Lenker 112 ist über eine Gabel 408, umfassend einen ersten Gabelarm 409 sowie einen zweiten Gabelarm 410 mit der Nabe 105 des Vorderrads 102 verbunden. Das Fahrrad 100 kann über einen Fahrradständer 500 verfügen. Zum Antrieb weist das Fahrrad 100 einen Tretkurbelantrieb mit einer ersten (115 - nicht gezeigt) und zweiten Tretkurbel 116 und einem ersten (117 - nicht gezeigt) bzw. zweiten Pedal 118 auf. Das von einem Fahrer aufgebrachte Antriebsmoment wird über eine Antriebseinheit auf das Hinterrad 103 übertragen. Beim gezeigten Fahrrad ist der Mechanismus in der Rahmenstruktur 200 eingekapselt und seitlich durch eine zweite vordere Abdeckung 217 und eine zweite hintere Abdeckung 215 verblendet. Die Abdeckungen können über Mittel zur Umlenkung der Luft während dem Fahren verfügen, so etwa wie gezeigt über Luftleitelemente 218, welche die Rahmenstruktur während der Fahrt umströmende Luft beispielsweise gezielt zu einer Bremsanlage leiten. Ein Fahrrad 100 mit einer Rahmenstruktur 200 gemäss der Erfindung kann zudem über einen Sattel 312, oder mehrere Sättel, verfügen. Erfindungsgemäss sind solche Abdeckungen jedoch nicht zwingend notwendig, oder können auch ein- oder vielteilig ausgebildete sein. Das gezeigte Fahrrad 100 kann zudem über weitere, für Fahrräder im Stand der Technik bekannte Komponenten verfügen, so etwa Schutzbleche 104 oder etwa einen Gepäckträger, der etwa an einem entsprechenden Befestigungselement 111 angebracht werden kann.

Wie in **Figur 2** gezeigt wird, kann die Übertragung eines vom Fahrer über die Pedale 117, 118 und Tretkurbeln 115 (nicht gezeigt), 116 auf die Tretlagerwelle 114 aufgebrachten Antriebsmoments erfindungsgemäss beispielsweise über eine erste Riemenscheibe 120 und einen Zahnriemen 119 auf eine zweite Riemenscheibe 121 und von dort auf eine Radnabe 105 übertragen werden. Zur Führung sowie zur Vorspannung des Zahnriemens 119 können eine oder mehrere Riemenspanner 125 oder Führungsscheiben (nicht gezeigt) verwendet werden. Der Zahnriemen 119 kann wie in **Figur 2** gezeigt wird, wenigstens teilweise in der zweiten Schwinge 204 angeordnet sein. Alternativ kann er jedoch auch wenigstens teilweise in der ersten Schwinge 201 angeordnet sein. Die zweite Schwinge 204 kann ein zweites (inneres) Fach 205 aufweisen, in welchem abgesehen vom Zahnriemen 119 noch weitere Elemente angeordnet sein können. So ist etwa denkbar, dass die Radnabe 105 eine Nabenschaltung enthalten kann, wodurch das auf die zweite Riemenscheibe 121 aufgebrachte Antriebsmoment übersetzt und auf das Hinterrad 103 übertragen wird. Das Hinterrad 103, bzw. die hintere Radnabe 105 kann über Befestigungsschrauben 109 und eine Befestigungsmutter 110 an der Rahmenstruktur 200 gelagert werden. Dazu kann diese an der ersten Schwinge 201 über einen ersten Bügel 203 und an der zweiten Schwinge 204 über einen zweiten Bügel 206 verfügen, welche die Befestigungsschrauben 109 aufnehmen können. Eine Rahmenstruktur 200 gemäss der Erfindung kann, wie in **Figur 2** gezeigt, zudem eine oder mehrere Öffnungen 221, etwa zur Befestigung eines Sitzrohrs (nicht gezeigt), aufweisen.

Wie in **Figur 3** gezeigt wird, kann bei einer Rahmenstruktur 200 gemäss der Erfindung die Achse eines Hinterrads gelagert werden, indem an der Nabe 105 des Hinterrads angebrachte Befestigungsschrauben109 in ein am zweiten Bügel 206 angeordnetes Ausfallende 209 eingeschoben und mit einer Befestigungsmutter 110 fixiert wird. Die Radachse kann dazu zusätzlich von einer Achshülse 127 gehalten werden, welche sie im Ausfallende 209 lagert.

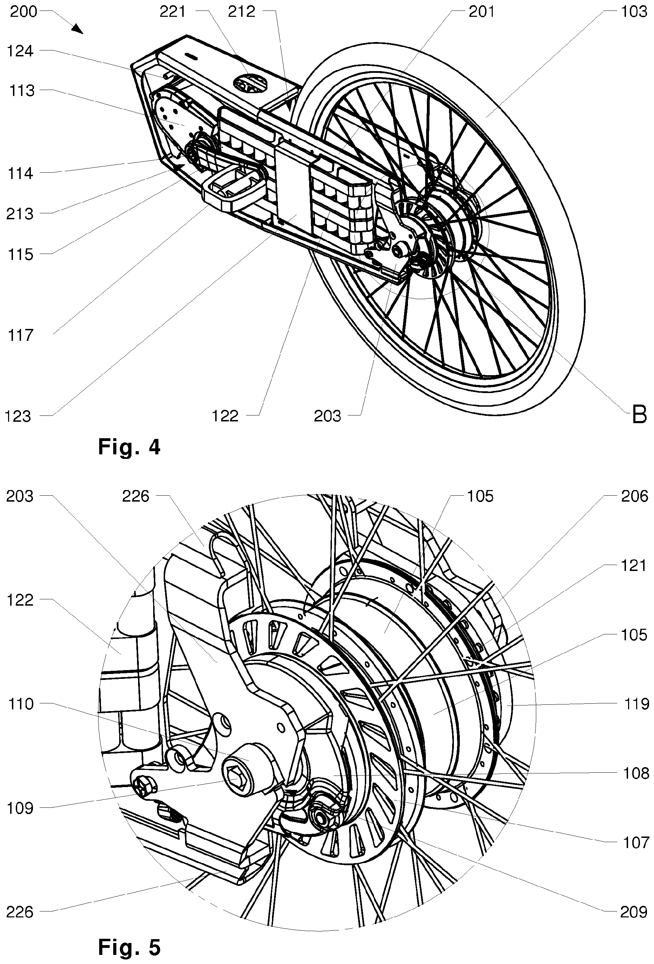

Wie in **Figur 4** gezeigt wird, kann ein Fahrrad 100 gemäss der Erfindung auch über wenigstens einen elektrischen Hilfsantrieb bzw. Motor 113 verfügen, der vorzugsweise in einer Antriebsbox 213 an der Tretlagerwelle 114 angeordnet ist. Als Energiespeicher für den Motor 113 können ein oder mehrere Akkupakete 122 vorzugsweise innerhalb der Rahmenstruktur 200 angeordnet sein. Ein Akkupaket 122 kann fest in der Schwinge 201 verbaut sein, und beispielsweise wie gezeigt durch Befestigungsmittel in Form eines Haltebügels 123 mit dieser verbunden sein, oder alternativ etwa durch einen Klappmechanismus einfach aus der Rahmenstruktur 200 entnommen werden. In der in **Figur 4** gezeigten Ausführungsform befinden sich die Akkupakete 122 in einem ersten Fach 202 innerhalb der ersten Schwinge 201. Die Rahmenstruktur 200 weist im Bereich der Antriebsbox 213 zudem ausreichend Platz für andere Komponenten auf, wie etwa der Elektronik der Antriebssteuerung 124.

Wie in **Figur 5** gezeigt, sind bei einer bevorzugten Ausführungsform der Erfindung der erste 203 und der zweite Bügel 206 so dimensioniert, dass sowohl eine Riemenscheibe 121, eine Radnabe 105 mit Nabenschalten und eine Scheibenbremse, beispielsweise vom Typ Rollerbrake - mit Bremsscheibe 107 und Bremssattel 108 - zwischen den beiden Ausfallenden 209 angeordnet sein können. Dank den beiden Bügeln 203 und 206 ist eine solche Anordnung auch bei einer relativ schmalen Rahmenstruktur 200, bzw. Radkasten 212 möglich. Zudem können die Bügel 203 und 206 zusätzlich Elemente, wie etwa Bohrungen zur Befestigung eines Bremssattels 108 aufweisen.

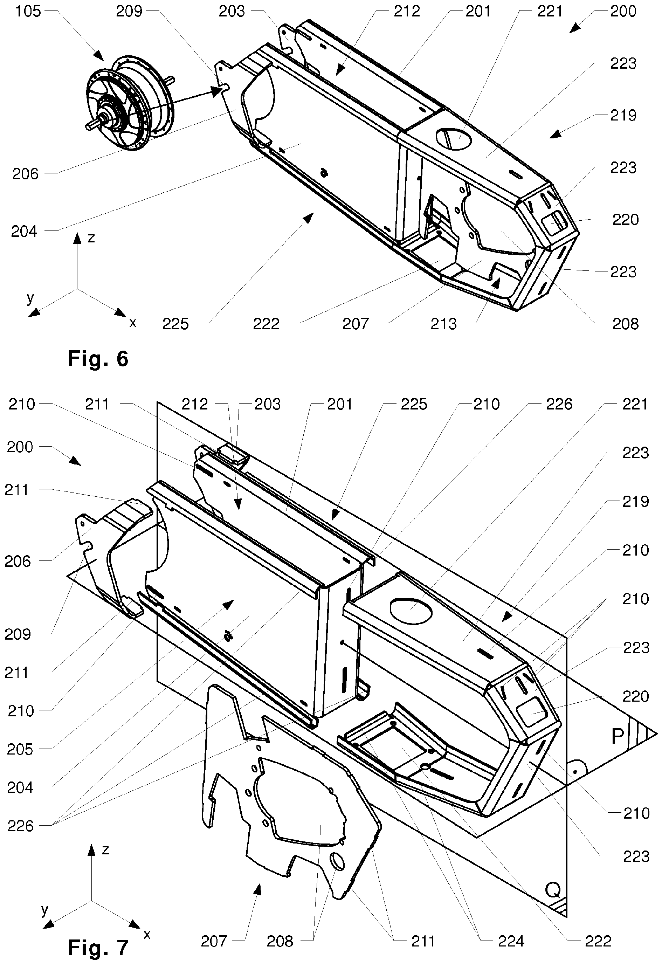

Wie in den **Figuren 6 und 7** gezeigt, kann eine erfindungsgemässe Rahmenstruktur 200 aus einer relativ geringen Anzahl von Blechteilen aufgebaut werden. Die in **Figur 6** gezeigt Rahmenstruktur 200 besteht im Wesentlichen aus fünf Blechteilen, die über Schweissverbindungen, Klebeverbindungen oder andere für Blechverbindungen geeignete Fügetechniken verbunden werden. In der gezeigten Ausführungsform ist eine Schwingenstruktur 225 mit einem ersten 203 und einem zweiten Bügel 206 mechanisch mit einer Rahmenbrücke 219 verbunden. Zur verbesserten Verbindung können die zu einzelnen Teile korrespondierenden Nuten 210 und Federn 211 aufweisen, welche einerseits als Positionierungsmittel, andererseits auch einer Erhöhung der Verbindungsfestigkeit dienen. Die verwendeten Blechteile können relativ kostengünstig mit Stanz-, Laserschneide- und Biegeverfahren hergestellt werden. Die Schwingenstruktur 225 ist aus einem ersten Blechteil und hat von oben betrachtet (z-Richtung) im Wesentlichen eine U-Form. Dieses erste Blechteil ist im Wesentlichen in einer ersten Biegeebene P in eine erste U-Form gebogen (gekrümmt). Wie gezeigt kann bei einer Schwingenstruktur deren Steifigkeit durch einen oberen und einen unteren Saum bzw. Abkantungen 226 erhöht werden. Gleichzeitig kann ein solches Umbiegen der Ränder zur Herstellung von Fächern 202 resp. 205 in den beiden Schwingen 201 resp. 204 verwendet werden. Die gezeigte Rahmenbrücke 219 ist aus einem zweiten Blechteil und hat einen, wenn von der Seite (y-Richtung) betrachtet, im Wesentlichen ebenfalls U-förmigen Bau und begrenzt radial zusammen mit der Schulter der Schwingenstruktur 225 eine Antriebsbox 213. Dieses zweite Blechteil ist im Wesentlichen in einer ersten Biegeebene Q in eine zweite U-Form gebogen (gekrümmt). Wie in **Figur 7** schematisch dargestellt ist, werde die Rahmenbrücke 219 und die Schwingenstruktur 225 bei der gezeigten Rahmenstruktur 200 so zueinander angeordnet, dass die erste Biegeebene P im Wesentlichen senkrecht zur zweiten Biegeebene Q steht. Wie gezeigt, kann eine erfindungsgemässe Rahmenbrücke 219 unterschiedliche Öffnungen aufweisen, so etwa eine Öffnung 220 zum Anschluss eines Unterrohrs (Unterrohr nicht abgebildet), eine Öffnung 221 zum Anschluss einer Sattelstütze (Sattelstütze nicht abgebildet) oder eine Öffnung 222 zur teilweisen Aufnahme eines Fahrradständers (Fahrradständer nicht abgebildet). Gleichzeitig kann eine erfindungsgemässe Rahmenbrücke 219 verschiedene Anschlussflächen 223 aufweisen, die in der gezeigten Ausführungsform eben sind, aber auch gekrümmt sein können. Zur Erhöhung der strukturellen Integrität der Rahmenbrücke 219 kann eine solche wie gezeigt vorzugsweise Lappen bzw. Abkantungen 224 aufweisen, die den Biege- und Beulwiderstand erhöhen. Zusätzlich kann in der Antriebsbox 213 wie gezeigt ein Trennplatte bzw. Schubplatte 207 als Stützstruktur angeordnet sein, die verschiedene Funktionen erfüllen kann. Einerseits erhöht sie die strukturelle Stabilität einer Rahmenstruktur 200, andererseits kann sie als räumliche Unterteilung der Antriebsbox 213 dienen, und beispielsweise ein vor eindringender Feuchtigkeit geschütztes Teilvolumen einer Rahmenstruktur 200, in dem etwa die elektronischen/ elektrischen Komponenten des Antriebs angeordnet sind, von einem nur bedingt geschützten Teilvolumen, in der etwa der Riemenantrieb angeordnet ist, trennen. Eine Stützstruktur 207 kann jedoch auch als Haltemittel für etwa einen Motor oder andere Komponenten verwendet werden. Dafür kann sie bei Bedarf entsprechende Ausnehmungen 208 aufweisen.

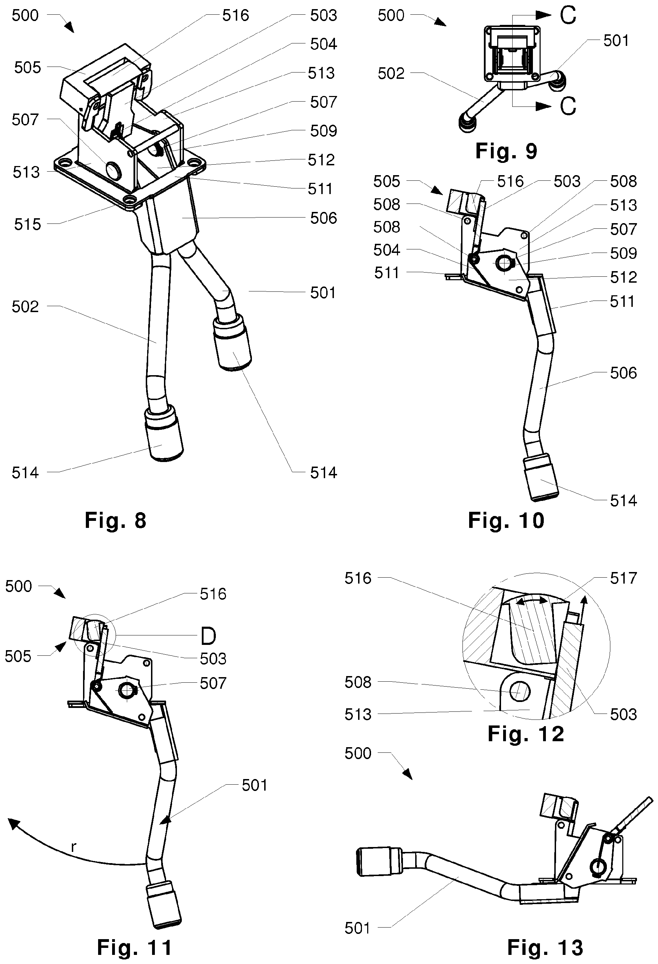

Bei einer erfindungsgemässen gekapselten Rahmenstruktur 200, kann auch eine vorteilhafte Ausführungsform eines gesicherten Fahrradständers 500 verwendet werden, wie in den **Figuren 8 bis 14** gezeigt wird. Der Fahrradständer 500 zeichnet sich unter anderem durch wenigstens eine auf- und eine eingeklappte Position aus. Ein solcher Fahrradständer 500 umfasst im Wesentlichen einen Stützteil, bestehend aus einer ersten 501 und einer zweiten Stütze 502, und einem im Wesentlichen im Innern einer Rahmenstruktur angebrachten Mechanismus zum Umklappen und Fixieren der Stützen 501, 502. In der gezeigten Ausführungsform verfügen die Stützen an ihren unteren Enden über Stützfüsse 514, die beispielsweise aus einem elastischen Material wie etwa Gummi bestehen. An ihrem anderen Ende sind die Stützen an einer Stützplatte 506 befestigt, z.B. mittels Schweisspunkten. Die Stützplatte 506 ist auf zwei Seiten mittels zwei Bolzen 507 gelenkig rotierbar mit zwei Ständerträgern 513 verbunden. Zur besseren Lagerung werden zudem Hülsen 510 verwendet. Die Ständerträger 513 weisen Bohrungen 515 auf, welche ihrer Befestigung an der Rahmenstruktur 200 beispielsweise mittels Schrauben oder Nieten dienen. Zur Verbesserung einer solchen Verbindung kann eine Art Rahmenplatte 511 verwendet werden, die ebenfalls über Bohrungen 515 verfügt. Wie in den **Figuren 8 bis 14** gezeigt wird, kann ein erfindungsgemässer Fahrradständer in einigen Ausführungsformen zudem einen Sperrmechanismus aufweisen, der einen automatischen Türöffner umfasst, welcher zweiseitig mit den beiden Ständerträgern 513 fest verbunden ist. Eine Wippe 512 ist ebenso wie der Ständerträger 513 gelenkig rotierbar auf den Bolzen 507 gelagert und zusätzlich mit einem Verbindungsstift 518 mit dem Ständerträger 513 so verbunden, dass zwischen diesen Körpern keine relativen Rotationen möglich sind. Ein Schliessriegel 503 ist über einen Achsstift 519 drehbar mit der Wippe 512 verbunden und wird, wie u.a. in **Figur 10** gezeigt wird, bei aufgeklappter Position des Fahrradständers 500 von einer Torsionsfeder 504 gegen den Türöffner 505 gedrückt. Dadurch wird ein Zuklappen des Ständers durch ein an der Türöffnerfalle 516 angeordnetes Sperrelement 517 verhindert (vgl. **Figur 12**). Zum Zuklappen des Fahrradständers 500 kann eine Spannung am Türöffner 505 angelegt werden, wodurch ein Schwenken der Türöffnerfalle 516 ermöglicht wird (vgl. **Figur 12**). Damit wird der Schliessriegel 503 nicht mehr weiter vom Sperrelement 517 der Türöffnerfalle 516 blockiert und eine Rotation r der Stützen 501, 502 um die Achse der Bolzen 507 wird möglich, wodurch der Fahrradständer 500 in einen zugeklappten Zustand gebracht werden kann (vgl. **Fig. 13**). Ein solcher Mechanismus ist möglich, da der eigentliche relativ einfache Verriegelungsmechanismus in der Rahmenstruktur 200 angeordnet ist und so vor direktem Zugriff bzw. Manipulation geschützt ist. Durch die Verwendung eines marktüblichen automatischen Türöffners 505 kann zudem ein verlässliches und relativ kostengünstiges elektromechanisches Verschlusssystem verwendet werden, das einen Benutzer zudem meist auch mittels eines Summgeräusches akustisch auf die erfolgte Entriegelung hinweist. Die Achsstifte 519 und Bolzen 507 eines erfindungsgemässen Fahrradständers können mit Sicherungsringen 509 befestigt werden, wodurch bei Defekten im Mechanismus relativ einfach Teile desselben ausgewechselt werden können. Um den korrekten Verschluss des Ständers detektieren zu können, kann dieser einen Endschalter aufweisen, der das Anliegen des Schliessriegels 503 am Türöffner 505, bzw. der Türöffnerfalle 516 oder dem Sperrelement 517 detektiert.

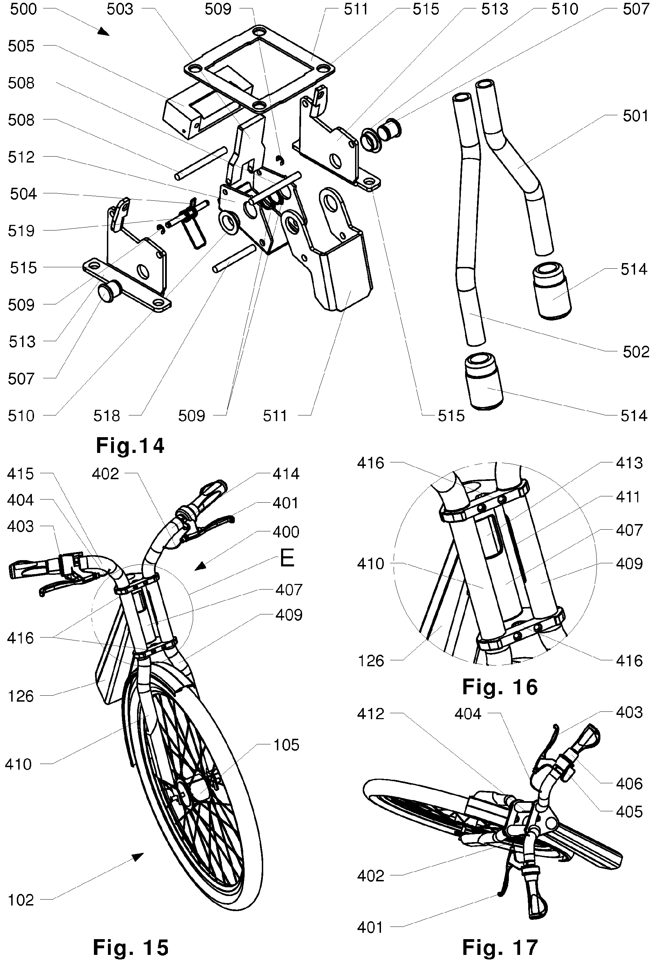

Wie in **Figur 15** gezeigt, kann ein erfindungsgemässes Fahrrad 100 über ein Andockmittel 400 zur Verbindung des Fahrrads 100 mit beispielsweise einer Verleihstation verfügen. Dazu ist in der in den **Figuren 15 bis 17** gezeigten Ausführungsform eines erfindungsgemässen Fahrrads 100 die Verwendung einer im Wesentlichen zweigeteilten Fahrradgabel 408 vorgesehen. Diese umfasst in der gezeigten Ausführungsform der Erfindung einen ersten Gabelarm 409 sowie einen zweiten Gabelarm 410. Die beiden Gabelarme 409, 410 bestehen im Wesentlichen aus Rundrohren und erstrecken sich von der Nabe 105 des Vorderrads 102 über den Bereich des Steuerrohrs 407 bis in den ersten 414 bzw. zweiten Lenkholm 415. Dabei verfügen die beiden Rundrohre im Bereich der Lenkholme 414, 415 über einen geringeren (verjüngten) Durchmesser als im Bereich der Nabe 105. Eine solche Verjüngung kann vorzugsweise mit einem Rundpressen erzeugt werden. Die Verwendung solch durchgängig rohrförmiger Gabelarme ermöglicht unter anderem eine geschützte Anordnung von Bremskabeln 402, 404 innerhalb der Gabelarme 408, 409, wodurch Vandalismus zu einem gewissen Grad vorgebeugt werden kann. Die Bremskabel 402, 404 können dazu relativ unmittelbar beim ersten 401 resp. zweiten Bremsgriff 403 in die Gabelarme 409 resp. 410 hineingeführt werden. Ebensolches gilt für Anschlüsse an den Schaltgriff 406 und etwa eine Konsole 405 als Teil der Gangschaltung oder elektronischen Steuerung des Fahrrads 100. Im Bereich des Steuerrohrs 407 werden die beiden Gabelarme 409, 410 von einer oberen und einer unteren Gabelbrücke 416 gehalten, wie u.a. in **Figur 16** gezeigt wird. Die Gabelarme 409 resp. 410 können vorzugsweise im Bereich des Andockmittels 400 über einen ersten 411 bzw. zweiten Kontaktpol 412 verfügen, über welche etwa die Akkus 122 geladen werden können.

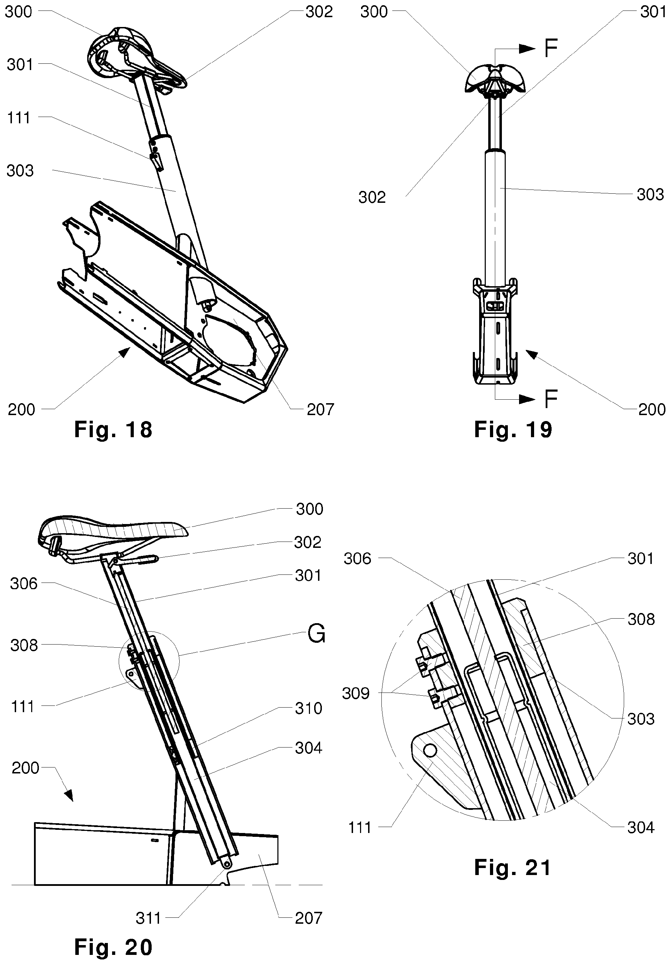

In **Figur 18** wird eine mögliche Ausführungsform einer Rahmenstruktur 200 mit einer Sattelbefestigung 300 gezeigt. Eine solche umfasst einerseits den eigentlichen Sattel 312, eine Sattelstütze 301, sowie einen im Wesentlichen in der Sattelstütze 301 und in einem Sitzrohr 303 angeordneten Verstellmechanismus zur Einstellung einer gewünschten Sattelhöhe. Dieser kann beispielsweise mittels eines unter dem Sattel angebrachten Verstellhebels 302 betätigt werden. Wie in **Figur 20** gezeigt wird, kann ein solcher Verstellmechanismus bevorzugt eine Gasdruckfeder 304 umfassen, die an ihrem unteren Ende eine Verankerung 311 in der Rahmenstruktur 200, bspw. an der Stützstruktur 207 aufweist und am anderen Ende mit der Sattelstütze 301 oder direkt mit dem Sattel 312 verbunden ist. In der in **Figur 20** gezeigten Ausführungsform ist die Kolbenstange 306 der Gasdruckfeder 304 mit einer Halterung des Sattels 312 verbunden. Um relative Rotation zwischen dem Sattel 312 und dem restlichen Fahrrad 100 zu verhindern, ist erfindungsgemäss vorgesehen, dass die Sattelstütze 301 keinen kreisrunden Querschnitt aufweist. In den in den **Figuren 18** bis **21** gezeigten Ausführungsformen hat die Sattelstütze 301 etwa einen rechteckigen Querschnitt. Im Bereich des oberen Endes des Sitzrohrs 303 ist erfindungsgemäss eine Manschette 308 als Führungshülse des Sattelstütze 301 angebracht, die über einen mit dem äusseren Querschnitt der Sattelstütze 301 korrespondierenden inneren Querschnitt verfügt - also eine im Wesentlichen rechteckige innere Öffnung aufweist. Die Manschette 308 ist fest mit dem Sitzrohr 303 verbunden, etwa durch eine Verschraubung 309. Zusätzlich kann die Sattelstütze 301 im Bereich ihres unteren Endes über eine eigene äussere Führungshülse 310 verfügen, welche die Sattelstütze 301 im Sitzrohr 303 führt und zudem bspw. die maximale Sitzhöhe beschränkt.

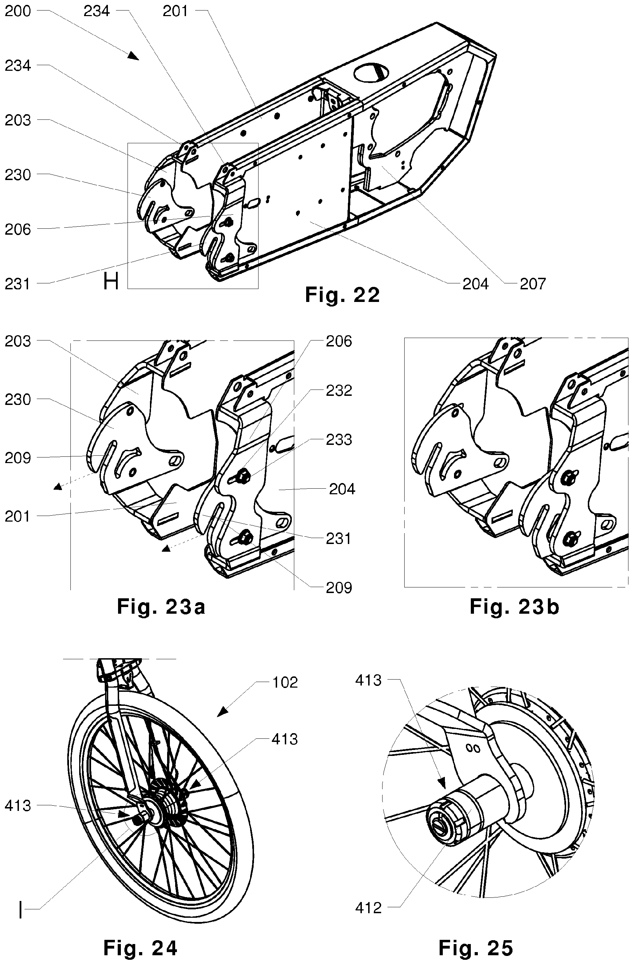

**Figur 22** zeigt eine weitere erfindungsgemässe Rahmenstruktur 200, bei der die Aufnahmemittel für das Hinterrad erste und zweite Bügel 203, 206 und daran angeordnete erste und zweite Halteelemente 230, 231 aufweisen. Diese sind relativ zu den Schwingen 201, 204 verstellbar, wie nachfolgend in den **Figuren 23a** und **23b** gezeigt wird. Die Stützstruktur 207 der gezeigten Rahmenstruktur 200 umfasst eine Platte, die bereichsweise durch eine zweite auf ihr aufliegende Platte mechanisch verstärkt ist. Wie in **Figur 23a** schematisch durch die gestrichelten Pfeile dargestellt, gezeigt, kann die Position der Halteelemente 230, 231 relativ zu den Bügeln 203, 206 und damit auch zu den beiden Schwingen 201, 204 verstellt werden. Dazu sind die Halteelemente 230, 231 über in Längsöffnungen 232 gelagerte Stellschrauben 233 mit den Bügeln 203, 206 verbunden. Auf den Stellschrauben 233 sind Muttern angeordnet, so dass die Halteelemente 230, 231 an verschiedenen Positionen relativ zu den Bügeln 203, 206 (respektive den Schwingen 201 , 204) fixiert werden können. So kann z.B. eine in den Ausfallenden 209 angeordnete Achse eines Hinterrads (nicht dargestellt) in unterschiedlichen Abständen zur Tretlagerwelle (nicht dargestellt) positioniert werden und folglich auch eine Antriebskette oder ein Antriebsriemen zwischen Tretlagerwelle und Hinterrad gespannt oder entspannt werden. Somit kann ein Hinterrad auch ohne Ketten- oder Riemenspanner einfach montiert oder ausgetauscht werden. **Figur 23a** zeigt eine Rahmenstruktur, bei der die Halteelemente 230, 231 in einer ersten Position sind, in der ein angebrachter Antriebsriemen entspannt wäre. **Figur 23b** zeigt die Halteelemente 230, 231 in einer zweiten Position, in welcher ein Antriebsriemen in einem gespannten Zustand wäre.

Die **Figuren 24** und **25** zeigen einen Ausschnitt einer Ausführungsform eines Fahrrads, bei welchem ein aus zwei Teilen bestehendes Andockelement 413 im Bereich der Aufhängung des Vorderrads 102 angeordnet ist. Die zwei Teile sind in axialer Richtung beidseitig vom Rad 102 angeordnet. Das gezeigte Andockelement 413 ist im Wesentlichen zylindrisch - bzw. bolzenförmig - wodurch eine besonders einfache Ankopplung an eine Andockstation (nicht dargestellt) ermöglicht wird. Wie in **Figur 25** dargestellt, kann ein solches Andockelement 413 mehrere in axialer Richtung voneinander getrennter Bereiche aufweisen, so etwa einen Kontaktpol 412 zur elektrischen Kontaktierung. Eine solche elektrische Kontaktierung erfolgt in der gezeigten Ausführungsform über einen Schleifkontakt. Ein zweiter Kontaktpol (nicht dargestellt) ist am anderen Teil des Andockelements 413 angeordnet. Jedoch können erfindungsgemäss auch zwei Kontaktpole auf demselben Teil angeordnet sein. Die axial an den Kontaktpol 412 angrenzenden Bereiche dienen u.a. der sicheren mechanischen Ankopplung des Fahrrads an eine Andockstation.

**BEZEICHNUNGSLISTE**

| | | | |
|---|---|---|---|
| 100 | Fahrrad | 126 | Unterrohr (Verbindungsträger) |
| 102 | Vorderrad | 127 | Achshülse |
| 103 | Hinterrad | 200 | Rahmenstruktur |
| 104 | Schutzblech | 201 | erste Schwinge |
| 105 | Nabe (Nabenschaltung) | 202 | erstes Fach |
| 106 | Bremse | 203 | erster Bügel |
| 107 | Bremsscheibe | 204 | zweite Schwinge |
| 108 | Bremssattel (-zange) | 205 | zweites Fach |
| 109 | Befestigungsschraube | 206 | zweiter Bügel |
| 110 | Befestigungsmutter | 207 | Stützstruktur |
| 111 | Befestigungselement | 208 | Ausnehmung |
| 112 | Lenker | 209 | Aufnahmemittel (Ausfallende) |
| 113 | Motor | 210 | Nut (Ausnehmung) |
| 114 | Tretlagerwelle | 211 | Feder |
| 115 | erste Tretkurbel | 212 | Radbox (Radkasten) |
| 116 | zweite Tretkurbel | 213 | Antriebsbox |
| 117 | erstes Pedal | 214 | erste hintere Abdeckung |
| 118 | zweites Pedal | 215 | zweite hintere Abdeckung |
| 119 | Zahnriemen | 216 | erste vordere Abdeckung |
| 120 | erste Riemenscheibe | 217 | zweite vordere Abdeckung |
| 121 | zweite Riemenscheibe | 218 | Luftleitelement |
| 122 | Akku (Akkupakete) | 219 | Rahmenbrücke |
| 123 | Haltebügel | 220 | Öffnung (Unterrohranschluss) |
| 124 | Antriebsteuerung | 221 | Öffnung (Sattelanschluss) |
| 125 | Riemenspanner | 222 | Öffnung (Ständeranschluss) |
| 223 | Anschlussfläche (Stirnfläche) | 405 | Konsole |
| 224 | Abkantung (Rand) | 406 | Schaltgriff |
| 225 | Schwingenstruktur | 407 | Steuerrohr |
| 226 | Abkantung (Rand) | 408 | Fahrradgabel (Gabel) |
| 230 | erstes Halteelement | 409 | erstes Gabelrohr (Gabelarm) |
| 231 | zweites Halteelement | 410 | zweites Gabelrohr (Gabelarm) |
| 232 | Längsöffnung | 411 | erster Kontaktpol |
| 233 | Stellschraube | 412 | zweiter Kontaktpol |
| 234 | Befestigungspunkte | 413 | Andockelement |
| 300 | Sattelbefestigung | 414 | erster Lenkholm |
| 301 | Sattelstütze | 415 | zweiter Lenkholm |
| 302 | Verstellhebel (-mechanismus) | 416 | Gabelbrücke |
| 303 | Sitzrohr (Sitzsäule) | 500 | Ständer |
| 304 | Gasdruckfeder | 501 | erste Stütze |
| 305 | Befestigungsmittel | 502 | zweite Stütze |
| 306 | Kolbenstange | 503 | Schliessriegel |
| 307 | Zylinder | 504 | Torsionsfeder |
| 308 | Manschette (Führungshülse) | 505 | Türöffner |
| 309 | Befestigungsmittel (Schraube) | 506 | Stützplatte (-halterung) |
| 310 | Führungshülse (innen) | 507 | Bolzen (Drehlager) |
| 311 | Verankerung | 508 | Stift |
| 312 | Sattel | 509 | Sicherungsring |
| 400 | Andockmittel | 510 | Hülse |
| 401 | erster Bremsgriff | 511 | Rahmenplatte |
| 402 | erstes Bremskabel | 512 | Wippe |
| 403 | zweiter Bremsgriff | 513 | Ständerträger (Trägerplatte) |
| 404 | zweites Bremskabel | 514 | Stützfuss |
| 515 | Bohrung (Ausnehmung) | | |
| 516 | Türöffnerfalle (schwenkbar) | | |
| 517 | Sperrelement | | |
| 518 | Verbindungsstift | | |
| 519 | Achsstift | | |

## Patentansprüche

1. Fahrrad (100) mit einer Rahmenstruktur (200), umfassend
a) eine Schwingenstruktur aus einem ersten im Wesentlichen U-förmigen Blechteil (225) zur Aufnahme eines Rades (103), sowie
b) eine Rahmenbrücke aus einem zweiten im Wesentlichen U-förmigen Blechteil (219), wobei
c) das erste U-förmige Blechteil (225) im Wesentlichen in einer ersten Biegeebene (P) in eine erste U-Form gebogen ist und
d) das zweite U-förmige Blechteil (219) in einer zweiten Biegeebene (Q) in eine im Wesentlichen zweite U-Form gebogen ist, wobei
e) die erste Biegeebene (P) im Wesentlichen senkrecht zur zweiten Biegeebene (Q) angeordnet ist.

2. Das Fahrrad (100) gemäss Patentanspruch 1, **dadurch gekennzeichnet, dass**
a) das erste U-förmige Blechteil (225) und das zweite U-förmige Blechteil (219) jeweils einen ersten Schenkel mit einem ersten Schenkelende und einen zweiten Schenkel mit einem zweiten Schenkelende sowie einen Schulterbereich aufweisen, wobei
b) das erste und das zweite Schenkelende des zweiten U-förmigen Blechteils (219) mechanisch mit dem Schulterbereich des ersten U-förmigen Blechteils (225) verbunden sind.

3. Das Fahrrad (100) gemäss Patentanspruch 2, **dadurch gekennzeichnet, dass** die Rahmenbrücke (219) eine Stützstruktur (207) umfasst, welche sich zwischen den beiden Schenkeln der Rahmenbrücke (219) erstreckt und diese miteinander wirkverbindet.

4. Das Fahrrad (100) gemäss Patentanspruch 3, **dadurch gekennzeichnet, dass** die Stützstruktur (207) zur Halterung einer Antriebskomponente dient.

5. Das Fahrrad (100) gemäss Patentanspruch 3 oder 4, **dadurch gekennzeichnet, dass** die Stützstruktur (207) wenigstens eine Ausnehmung (208) zur Aufnahme einer Antriebskomponente aufweist.

6. Das Fahrrad (100) gemäss einem der vorangehenden Patentansprüche, **dadurch gekennzeichnet, dass** zumindest ein Rand (226) der Schwingenstruktur (225) und/oder zumindest ein Rand (224) der Rahmenbrücke (219) wenigstens bereichsweise nach innen und/oder nach aussen abgekantet sind.

7. Das Fahrrad (100) gemäss einem der vorangehenden Patentansprüche, **dadurch gekennzeichnet, dass** die Rahmenbrücke (219) wenigstens eine Öffnung (220, 221, 220) zum Befestigen weiterer Rahmenteile und/oder eines Ständers und/oder zur Verwendung als Kühllufteintritt aufweist.

8. Das Fahrrad (100) gemäss einem der vorangehenden Patentansprüche, **dadurch gekennzeichnet, dass** das erste und das zweite Schenkelende der Schwingenstruktur (225) jeweils ein Aufnahmemittel (203, 206) zur Lagerung einer Radachse aufweisen.

9. Das Fahrrad (100) gemäss Patentanspruch 8, **dadurch gekennzeichnet, dass** die Aufnahmemittel (203, 206) bügelförmig sind.

10. Das Fahrrad (100) gemäss einem der Patentansprüche 8 und 9, **dadurch gekennzeichnet, dass** die Aufnahmemittel (203, 206) Ausfallenden (209) umfassen.

## Claims

1. Bicycle (100) comprising a frame structure (200), including
a) a swingarm structure comprising a first substantially U-shaped sheet-metal part (225) for holding a wheel (103), and
b) a frame bridge comprising a second substantially U-shaped sheet-metal part (219), wherein
c) the first U-shaped sheet-metal part (225) is bent to form a first U-shape substantially in a first bending plane (P), and
d) the second U-shaped sheet-metal part (219) is bent to form substantially a second U-shape in a second bending plane (Q), wherein
e) the first bending plane (P) is arranged substantially perpendicularly to the second bending plane (Q).

2. Bicycle (100) according to Claim 1, **characterized in that**
a) the first U-shaped sheet-metal part (225) and the second U-shaped sheet-metal part (219) each comprise a first leg with a first leg end and a second leg with a second leg end, and a shoulder region, wherein
b) the first and the second leg end of the second U-shaped sheet-metal part (219) are mechanically connected to the shoulder region of the first U-shaped sheet-metal part (225).

3. Bicycle (100) according to Claim 2, **characterized in that** the frame bridge (219) comprises a supporting structure (207) that extends between the two legs of the frame bridge (219) and operatively interconnects them.

4. Bicycle (100) according to Claim 3, **characterized in that** the supporting structure (207) is provided to hold a drive component.

5. Bicycle (100) according to Claim 3 or 4, **characterized in that** the supporting structure (207) comprises at least one recess (208) for receiving a drive component.

6. Bicycle (100) according to one of the preceding claims, **characterized in that** at least one edge (226) of the swingarm structure (225) and/or at least one edge (224) of the frame bridge (219) are bent at least partially inwards and/or outwards.

7. Bicycle (100) according to one of the preceding claims, **characterized in that** the frame bridge (219) comprises at least one opening (220, 221, 220) for fastening further frame parts and/or a stand and/or for use as a cooling-air inlet.

8. Bicycle (100) according to one of the preceding claims, **characterized in that** the first and the second leg end of the swingarm structure (225) each comprise a receiving means (203, 206) for mounting a wheel axle.

9. Bicycle (100) according to Claim 8, **characterized in that** the receiving means (203, 206) are bracket-shaped.

10. Bicycle (100) according to either of Claims 8 and 9, **characterized in that** the receiving means (203, 206) comprise dropouts (209).

## Revendications

1. Bicyclette (100), comprenant une structure de cadre (200), comportant
a) une structure de bras oscillant comprenant une première partie en tôle essentiellement en forme de U (225) pour recevoir une roue (103), et
b) un pont de cadre comprenant une deuxième partie en tôle essentiellement en forme de U (219),
c) la première partie en tôle en forme de U (225) est cintrée dans une première forme en U essentiellement dans un premier plan de flexion (P) et
d) la deuxième partie en tôle en forme de U (219) est cintrée essentiellement dans une deuxième forme en U dans un deuxième plan de flexion (Q),
e) le premier plan de flexion (P) étant disposé essentiellement perpendiculairement au deuxième plan de flexion (Q).

2. Bicyclette (100) selon la revendication 1, **caractérisée en ce que**
a) la première partie en tôle en forme de U (225) et la deuxième partie en tôle en forme de U (219) comprennent chacune une première branche avec une première extrémité de branche et une deuxième branche avec une deuxième extrémité de branche ainsi qu'une région d'épaulement,
b) la première et la deuxième extrémité de branche de la deuxième partie en tôle en forme de U (219) sont reliées mécaniquement à la région d'épaulement de la première partie en tôle en forme de U (225).

3. Bicyclette (100) selon la revendication 2, **caractérisée en ce que** le pont de cadre (219) comprend une structure de support (207) qui s'étend entre les deux branches du pont de cadre (219) et qui les relie de manière fonctionnelle.

4. Bicyclette (100) selon la revendication 3, **caractérisée en ce que** la structure de support (207) est fournie pour la fixation d'un composant d'entraînement.

5. Bicyclette (100) selon la revendication 3 ou 4, **caractérisée en ce que** la structure de support (207) comprend au moins un évidement (208) pour recevoir un composant d'entraînement.

6. Bicyclette (100) selon l'une des revendications précédentes, **caractérisée en ce qu'**au moins un bord (226) de la structure de bras oscillant (225) et/au moins un bord (224) du pont de cadre (219) sont coudés au moins en partie vers l'intérieur et/ou vers l'extérieur.

7. Bicyclette (100) selon l'une des revendications précédentes, **caractérisée en ce que** le pont de cadre (219) comprend au moins une ouverture (220, 221, 220) pour la fixation d'autres parties du cadre et/ou d'une béquille et/ou pour l'utilisation en tant qu'entrée d'air de refroidissement.

8. Bicyclette (100) selon l'une des revendications précédentes, **caractérisée en ce que** la première et la deuxième extrémité de branche de la structure de bras oscillant (225) comprennent chacune un moyen de réception (203, 206) pour le support d'un essieu de roue.

9. Bicyclette (100) selon la revendication 8, **caractérisée en ce que** les moyens de réception (203, 206) sont en forme d'étrier.

10. Bicyclette (100) selon l'une quelconque des revendications 8 et 9, **caractérisée en ce que** les moyens de réception (203, 206) comportent des pattes (209).
